# EUROPÄISCHE PATENTSCHRIFT

(11) **EP 2 642 030 B1**
(45) Veröffentlichungstag und Bekanntmachung des Hinweises auf die Patenterteilung: **07.01.2015**
(21) Anmeldenummer: 12002078.9
(22) Anmeldetag: 23.03.2012
(51) Int. Cl.: E02D 17/20, E01F 7/04, B21F 27/02, B21F 27/08

(54) **Schutznetz**
Protective net
Filet de protection

(43) Veröffentlichungstag der Anmeldung: 25.09.2013
(73) Patentinhaber: Isofer AG, 8934 Knonau (CH)
(72) Erfinder: Fulde, Marcel, 8810 Horgen (CH)
(74) Vertreter: Schaad, Balass, Menzl & Partner AG

(56) Entgegenhaltungen:
- EP-B1- 0 979 329
- WO-A1-2005/038143
- CH-B1- 698 305

## Beschreibung

Die vorliegende Erfindung betrifft ein Verfahren zur Herstellung eines Schutznetzes, ein Schutznetz, sowie die Verwendung eines solchen Schutznetzes zum Schutz vor Lawinen, Stein- oder Holzschlag, Murgang, Hangmuren oder zur Böschungssicherung.

Schutznetze der oben erwähnten Art werden zu diesem Zwecke beispielsweise an einem Abhang installiert, damit herunterfallende Steine, Gehölz, Schneelawinen oder Ähnliches sicher aufgefangen werden.

Solche Schutznetze sind beispielsweise aus EP-B-0 979 329 bekannt. Bei diesen Schutznetzen wird aus einzelnen Drahtlitzen, Drahtseilen oder Drahtbündeln ein zusammenhängendes Maschennetz geflochten. Diese Drahtnetze werden montagefertig hergestellt und dann für die Lagerung und den Transport zusammengerollt. Deshalb benötigt man dafür relativ viel Platz. Ein weiterer Nachteil besteht darin, dass die vorgefertigten Netze in zusammengerolltem Zustand unter Spannung stehen, wodurch sie sich beim Öffnen der Netzrolle explosionsartig strecken. Wenn sich während des Transports, insbesondere per Helikopter, eine solche Netzrolle versehentlich löst und öffnet, birgt dies ein grosses Gefahrenpotential. Aber auch am Montageort selber bringt das öffnen der Netzrolle aus oben genanntem Grund für die Montagearbeiter ein grosses Verletzungsrisiko mit sich.

Dem Gewicht solcher Schutznetze, insbesondere bei Verwendung im Gebirge, kommt aus Transport- und Montagegründen eine erhebliche Bedeutung zu, da sie oft an schwer zugänglichen Orten in unwegsamem Gelände und vielfach unter Helikoptereinsatz montiert werden müssen. Insbesondere bei Verwendung dicker Drahtseile zur Herstellung eines Drahtseil-Schutznetzes mit einem hohen Lastaufnahmevermögen ist der Transport aufgrund der Sperrigkeit eines komplett vorgefertigten Netzes erschwert.

Eine Aufgabe der vorliegenden Erfindung ist es daher, ein Verfahren zur Herstellung eines flexiblen, strapazierfähigen und wetterbeständigen Schutznetzes der eingangs erwähnten Art bereitzustellen, das eine einfache, rasche und unproblematische Herstellung, Lagerung, Transportierbarkeit und Montage des Schutznetzes erlaubt.

Diese Aufgabe wird gelöst durch das erfindungsgemässe Verfahren gemäss Anspruch 1 zur Herstellung eines Schutznetzes und durch ein solches Schutznetz gemäss Anspruch 14. Bevorzugte Ausführungsformen sind Gegenstand der abhängigen Ansprüche.

Das erfindungsgemässe Verfahren zur Herstellung eines Schutznetzes umfasst die folgenden Schritte:
- Zunächst werden mindestens ein erstes und mindestens ein zweites Netzelement individuell aus jeweils mindestens einem Seil in sich geschlossenen gefertigt. Dabei werden die Seile des ersten und des zweiten Netzelements so geführt, dass jedes der so gefertigten Netzelemente mehrere Seil-Kreuzungspunkte, wo sich jeweils zwei Seilabschnitte kreuzen, aufweist.
   Das erste und das zweite Netzelement werden zueinander parallel und in einer Längsrichtung des zu bildenden Schutznetzes voneinander beabstandet angeordnet, so dass ein erster Netzrandabschnitt des ersten Netzelements einem zweiten Netzrandabschnitt des zweiten Netzelements zugewandt ist. Dabei weist das erste Netzelement mehrere im ersten Netzrandabschnitt angeordnete erste Seilrandabschnitte, die zwischen jeweils zwei Seil-Kreuzungspunkten verlaufen und dem zweiten Netzrandabschnitt zugewandt sind, auf, und das zweite Netzelement weist mehrere im zweiten Netzrandabschnitt angeordnete zweite Seilrandabschnitte, die zwischen jeweils zwei Seil-Kreuzungspunkten verlaufen und dem ersten Netzrandabschnitt zugewandt sind, auf.
- Daraufhin werden mithilfe mindestens eines Verbindungsseils zumindest ein Teil der ersten Seilrandabschnitte des ersten Netzelements mit zumindest einem Teil der den ersten Seilrandabschnitten zugewandten zweiten Seilrandabschnitte des zweiten Netzelements verbunden.
   Dabei wird das mindestens eine Verbindungsseil zwischen dem ersten und dem zweiten Netzelement so geführt, dass ein in sich geschlossenes Verbindungsnetzelement mit mehreren Verbindungsseil-Kreuzungspunkten, wo sich jeweils zwei Verbindungsseilabschnitte kreuzen, erhalten wird.

Das erfindungsgemässe Verfahren ermöglicht auf einfache Art und Weise die Herstellung eines Schutznetzes zum Schutz vor Lawinen, Stein- oder Holzschlag, Murgang, Hangmuren oder zur Böschungssicherung.

Typischerweise müssen solche Schutznetze in unwegsames Gelände transportiert und dort unter schwierigen Montagebedingungen installiert werden. Das erfindungsgemässe Verfahren ist insbesondere vorteilhaft, da die einzelnen Netzelemente individuell gefertigt, gelagert und transportiert werden können. Somit muss nicht ein grosses, schweres und sperriges Netz transportiert werden, sondern es ist möglich, einzelne Netzelemente zu transportieren und das Schutznetz am Montageort oder zumindest in dessen Nähe fertig zu stellen.

Das erfindungsgemässe Verfahren beschränkt sich selbstverständlich nicht auf die Herstellung eines Netzes, das lediglich aus zwei über ein Verbindungsnetzelement verbundene Netzelemente besteht, sondern im Sinne der Erfindung können beliebig viele Netzelemente über jeweils ein zwischen zwei Netzelementen angeordnetes Verbindungsnetzelement verbunden werden. So erlaubt das erfindungsgemässe Verfahren eine einfache Anpassung der Grösse des Schutznetzes je nach Bedarf: Einerseits kann die Länge des Schutznetzes über die Länge der individuell gefertigten Netzelemente und/oder des Verbindungsnetzelements variiert werden und andererseits auch über die Anzahl an Netzelementen, die über Verbindungsnetzelemente miteinander verbunden werden. Auch ein bereits vorgefertigtes Netz kann dank des erfindungsgemässen Verfahrens mit zusätzlichen Netzelementen nachgerüstet werden.

An dieser Stelle sei erwähnt, dass erfindungsgemäss die einzelnen Netz- und/oder Verbindungsnetzelemente nicht zwingend dieselbe Höhe aufweisen müssen. Als Höhe der Netz- beziehungsweise Verbindungsnetzelemente wird dabei die Richtung, quer zur Längsrichtung des Schutznetzes gesehen. Es ist insofern nicht zwingend, dass die Netz- und/oder Verbindungsnetzelemente in Längsrichtung des Schutznetzes eine gleiche Anzahl an Reihen an Kreuzungspunkten aufweisen. Dadurch ist es möglich, durch das erfindungsgemässe Verfahren ein Schutznetz herzustellen, das auch in Bezug auf die Höhe der Netz- und/oder Verbindungsnetzelemente spezifisch an die örtlichen Gegebenheiten angepasst werden kann.

Ein weiterer Vorteil eines gemäss dem Verfahren der vorliegenden Erfindung hergestellten Schutznetzes liegt darin, dass beschädigte Netzelemente durch neue ausgetauscht werden können, indem ein einzelnes beschädigtes Netzelement als Ganzes entfernt und ein neues Ersatz-Netzelement parallel und beabstandet zum bestehenden Schutznetz angeordnet wird, so dass das Ersatz-Netzelement gemäss dem erfindungsgemässen Verfahren mit dem bestehenden Schutznetz verbunden werden kann. Ebenso können bereits bestehende Schutznetze dank des erfindungsgemässen Verfahrens mit zusätzlichen Netzelementen nachgerüstet werden.

Halte- und Befestigungsseile können zudem ohne weitere Verbindungsmittel direkt in das Netz eingefädelt werden, was wiederum eine Material- und Gewichtsreduktion erlaubt. In der Regel werden solche Schutznetze an ihrem oberen und unteren Rand an Tragseilen befestigt.

Insbesondere im Falle einer gelenkigen Verbindung von Netz- und Verbindungsnetzelementen des erfindungsgemässen Schutznetzes können die Netzelemente und je nach Ausführungsform des Schutznetzes gegebenenfalls auch die Verbindungsnetzelemente zickzackartig gefaltet und aufeinander gelegt werden und es ist möglich, Tragseile direkt in das gefaltete Netz einzuführen. Dadurch wird die Montage im Gelände und insbesondere bei beschränkten Platzverhältnissen erheblich vereinfacht, da zum Anbringen von Befestigungsseilen das Netz nicht in seiner Länge ausgebreitet werden muss.

Die erfindungsgemässe Netzherstellung ist auch als Linienfertigung möglich und erlaubt sowohl eine manuelle Herstellung des Schutznetzes als auch eine teilautomatische oder vollautomatische Fertigung.

Gemäss einer bevorzugten Ausführungsform der Erfindung werden zumindest das erste und zweite Netzelement jeweils aus nur einem einzigen Seil gefertigt. Die Verbindung der zwei Enden des Seils, respektive Verbindungsseils erfolgt bevorzugt derart, dass die beiden einander entgegen gerichteten Seilenden in einem Überlappungsbereich verbunden werden, bevorzugt mittels Pressklemmen, Verschweissen oder Vergiessen. Dadurch, dass die beiden Seilenden einander entgegengerichtet verbunden werden, können sie auch grosse Zugkräfte aufnehmen und die Netzelemente sind besonders stabil.

In einer bevorzugten Ausführungsform der Erfindung wird lediglich ein einziges Verbindungsseil zwischen dem ersten und dem zweiten Netzelement geführt. Wie oben ausgeführt, werden dabei zumindest ein Teil der jeweiligen ersten Seilrandabschnitte des ersten Netzelements mit zumindest einem Teil der den ersten Seilrandabschnitte gegenüberliegenden, zweiten Seilrandabschnitten des zweiten Netzelements verbunden.

Die Verbindung der jeweiligen Seilrandabschnitte des ersten und des zweiten Netzelements mit dem Verbindungsseil erfolgt an Verbindungspunkten, die sich jeweils zwischen den jeweiligen Seil-Kreuzungspunkten der verbundenen Seilrandabschnitte befinden. Insbesondere erfolgt die Verbindung der jeweiligen Seilabschnitte des ersten und des zweiten Netzelements mit dem Verbindungsseil bevorzugt durch Verschlaufen und/oder Verschweissen und/oder mit Hilfe von Führungsmitteln und/oder mit Hilfe von Klemmmitteln. Im Gegensatz zu Klemmmitteln werden die Seile in Führungsmitteln nicht festgeklemmt, sondern lediglich geführt. Das heisst, dass das Führungsmittel entlang der zwei jeweiligen verbundenen Seilabschnitte verschiebbar ist. Diesbezüglich ist es natürlich auch möglich, dass das Führungsmittel so gestaltet ist, dass es an einen Seilabschnitt fixiert und lediglich entlang dem anderen zu verbindenden Seilabschnitt verschiebbar ist. Als Führungsmittel können beispielsweise Hülsen oder Ringe verwendet werden. In Bezug auf Klemmmitteln kommen in bekannter Weise Klemmen, insbesondere Kreuzklemmen, Bügelklemmen oder Presshülsen zum Einsatz.

Eine Verbindung der jeweiligen Seilrandabschnitte des ersten und des zweiten Netzelements mit dem Verbindungsseil durch Verschlaufen oder mittels Führungsmitteln ist besonders bevorzugt, denn sie ermöglicht eine gelenkige Verbindung der Netzelemente mit dem Verbindungsnetzelement im Bereich der Verbindungspunkte. Eine solche gelenkige Verbindung erlaubt ein zickzackartiges Zusammenfalten und/oder Zusammenrollen des Schutznetzes quer zur Längsrichtung des Schutznetzes, was die Lagerung und den Transport des Schutznetzes erheblich erleichtert.

Beim Verschweissen oder Verschlaufen der Seilrandabschnitte mit dem Verbindungsseil wiederum kann Material eingespart werden, da keine zusätzlichen Verbindungsmittel nötig sind. Wie bereits erwähnt, ist dies besonders vorteilhaft, da eine Gewichtsreduktion des Schutznetzes insbesondere bei dessen Verwendung im Gebirge aus Transport- und Montagegründen von Vorteil ist.

Gemäss einer besonders bevorzugten Ausführungsform der Erfindung werden mithilfe des mindestens einen Verbindungsseils alle ersten Seilrandabschnitte des ersten Netzelements mit allen zweiten Seilrandabschnitten des zweiten Netzelements verbunden.

Gemäss einer weiteren bevorzugten Ausführungsform der Erfindung sind die ersten Netzrandabschnitte des ersten Netzelements und/oder die zweiten Netzrandabschnitte des zweiten Netzelements relativ zum Verbindungseil des Verbindungsnetzelements beweglich. Dies bedeutet, dass die jeweiligen Seilrandabschnitte entlang des Verbindungsseils zwischen den zwei jeweiligen Seil-Kreuzungspunkten verschiebbar oder zumindest gelenkig verbunden sind.

Diese Beweglichkeit der Netzrandabschnitte relativ zum Verbindungsseil erlaubt, dass Spannungen, die insbesondere beim Auffangen von schweren dynamischen Lasten im Schutznetz auftreten, ideal verteilt werden können. Die lokale Krafteinwirkung der aufprallenden Lasten kann dadurch gleichmässig in alle Richtungen verteilt werden, was ein besonders hohes Energie- beziehungsweise Kraftaufnahmevermögen gewährleistet. Die beschriebene Beweglichkeit der Netzrandabschnitte verleiht dem Schutznetz zudem eine besonders hohe Flexibilität, was bedeutet, dass sich das Schutznetz beim Auffangen von Lasten in Zugrichtung des Gewichts plastisch deformieren und so die hohe kinetische Energie, die beim Aufprall von Lasten auftritt, abbauen kann. Des Weiteren erlaubt die Beweglichkeit der Netzrandabschnitte relativ zum Verbindungsseil eine höhere Anpassbarkeit des Netzes an die Geländegegebenheiten.

Aufgrund obiger Eigenschaften ist die Verbindung der Seilrandabschnitte mit dem Verbindungsseil durch Verschlaufen besonders bevorzugt, da sie einerseits die Beweglichkeit der Netzrandabschnitte relativ zum Verbindungsseil und andererseits eine Gewichtsreduktion erlaubt. Wie weiter oben erwähnt, können die Netzelemente dadurch zickzackartig gefaltet und aufeinander gelegt werden. Neben dem Vorteil der einfacheren Transportierbarkeit des so gefalteten Schutznetzes, können Trag- oder Befestigungsseile direkt in das gefaltete Netz eingeführt werden. Dies bringt eine erhebliche Raumersparnis mit sich, da sowohl bei der Herstellung als auch bei der Montage das Netz nicht in seiner Länge ausgebreitet werden muss und dadurch viel kleinere Wege zurückgelegt werden müssen.

Gemäss einer bevorzugten Ausführungsform der Erfindung werden die Enden der Seile des ersten und des zweiten Netzelements und die Enden des Verbindungsseils des Verbindungsnetzelements jeweils einander entgegengesetzt angeordnet und mittels einer nicht lösbaren Verbindung in sich geschlossen. Die nicht lösbare Verbindung erfolgt vorzugweise mittels Bügel- oder Pressklemmen. Alternativ kann die Verbindung auch in bekannter Weise durch Verknoten, Verschweissen, Vergiessen oder mittels Presshülsen erfolgen.

Eine erhöhte Stabilität des Schutznetzes kann erreicht werden, indem die sich kreuzenden Seilabschnitte der Seile und/oder der Verbindungsseile an den Kreuzungspunkten stabilisiert werden. In einer bevorzugten Ausführungsform sind daher die sich kreuzenden Seilabschnitte der Seile und/oder Verbindungsseile an den Kreuzungspunkten mittels Klemmen, Presshülsen, Führungsmitteln und/oder durch Verschweissen oder Vergiessen verbunden. Eine Verbindung mittels Bügel- oder Kreuzklemmen ist diesbezüglich besonders bevorzugt. Für eine erhöhte Stabilität des Schutznetzes reicht es auch aus, wenn lediglich ein Teil der sich kreuzenden Seilabschnitte der Seile und/oder Verbindungsseile an den Kreuzungspunkten verbunden wird. Es ist beispielsweise möglich, dass eine Verbindung der jeweiligen Seilabschnitte lediglich an jedem zweiten Kreuzungspunkt erfolgt. In dieser Hinsicht wird Bezug genommen auf das Dokument CH 698 305 B1, dessen Inhalt hiermit in diese Anmeldung aufgenommen wird.

Zur Erhöhung von Stabilität und Wetterfestigkeit werden für die Herstellung der Netzelemente und/oder des Verbindungsnetzelements bevorzugt Drahtseile aus Stahl verwendet. Je nach Anwendungsbereich ist auch eine Verwendung von Kunststoffseilen denkbar. Beim Einsatz von Drahtseilen sollten deren Flexibilität und die damit verbundene Steifigkeit sowie deren Korrosionsbeständigkeit berücksichtigt werden, daher werden bevorzugt verzinkte Stahlseile, insbesondere mit einer bevorzugten Dicke von 6 bis 12 mm verwendet. In der Regel werden Draht- oder Stahlseile aus mehreren verdrillten Seillitzen verwendet, wobei aber auch die Verwendung eines einzelnen Stahldrahtes von entsprechender Dicke denkbar ist. Ebenso können die Drahtseile zum Schutz mit einer Schutzhülle, beispielsweise aus Kunststoff, versehen sein.

Falls ein geringes Gewicht des Schutznetzes von besonderer Bedeutung ist, können alternativ auch Seile aus Kunststoff- oder Naturfasern zur Herstellung des Netzes verwendet werden.

Gemäss einer bevorzugten Ausführungsform der Erfindung werden das erste und das zweite Netzelement in Bezug auf ihre Höhe und Form baugleich gefertigt. Dies bedeutet, dass die beiden Netzelemente in Längsrichtung des Schutznetzes eine gleiche Anzahl an Reihen an Kreuzungspunkten aufweisen. Dadurch wird ein paralleles Anordnen des ersten und des zweiten Netzelements sowie das Verbinden ihrer jeweiligen Randseilelemente mithilfe des Verbindungsseils erleichtert. In Querrichtung des Schutznetzes müssen bei dieser Ausführungsform die Anzahl Spalten an Kreuzungspunkten des ersten Netzelements nicht gleich sein, wie diejenige des zweiten Netzelements. Die beiden Netzelemente können somit eine unterschiedliche Länge aufweisen. Dies ist insbesondere von Vorteil, wenn ein bestehendes Schutznetz um eine bestimmte Länge verlängert werden muss. Dann kann beispielsweise das zweite Netzelement in seiner Länge so gefertigt werden, dass es das bestehende Schutznetz um exakt die gewünschte Verlängerung erweitern.

Gemäss einer weiteren bevorzugten Ausführungsform der Erfindung werden das erste und das zweite Netzelement in Bezug auf ihre Grösse und Form baugleich gefertigt. Die Grösse der Netzelemente, beziehungsweise des Schutznetzes wird durch die jeweilige Länge in Längsrichtung des Schutznetzes und durch die jeweilige Höhe in einer rechtwinklig zur Längsrichtung verlaufenden Querrichtung des Schutznetzes festgelegt. Im Sinne der vorliegenden Erfindung bedeutet dies, dass das erste und das zweite Netzelement in Längsrichtung des Schutznetzes die gleiche Länge und in Querrichtung des Schutznetzes die gleiche Höhe aufweisen. Insbesondere sollen das erste und das zweite Netzelement in Längsrichtung eine gleiche Anzahl an Reihen und in Querrichtung des Schutznetzes eine gleiche Anzahl an Spalten an Kreuzungspunkten aufweisen. Dadurch wird gewährleistet, dass das erste und das zweite Netzelement im Aufbau aufeinander abgestimmt sind und ihre jeweiligen Seilrandabschnitte mithilfe des Verbindungsseils stabil verbunden werden können.

Bevorzugt werden zudem das erste und das zweite Netzelement aus dem gleichen Material und durch ein gleiches Herstellungsverfahren gefertigt. Dadurch kann der Herstellungsprozess vereinfacht und gegebenenfalls auch halb- oder vollautomatisch erfolgen.

Gemäss einer besonders bevorzugten Ausführungsform der Erfindung wird neben dem ersten und dem zweiten Netzelement auch das Verbindungsnetzelement in Bezug auf die Form baugleich gefertigt. Ein solches Schutznetz weist eine regelmässige Form auf und besteht aus sich repetierenden, baugleichen Einheiten von Netz- und Verbindungsnetzelementen.

In Bezug auf die Netzelemente und das Verbindungsnetzelement sind verschiedenste Grössen und Formen von rechteckig bis polygonal denkbar. Auch die Länge der Seilabschnitte zwischen zwei jeweiligen Kreuzungspunkten und damit die Weite der zwischen Kreuzungspunkten gebildeten "Maschen" sind frei wählbar. So kann das Schutznetz je nach Bedarf aus feinmaschigen und/oder weitmaschigen Netzelementen, beziehungsweise Verbindungsnetzelementen hergestellt werden.

Gemäss einer bevorzugten Ausführungsform der Erfindung werden die Seile des ersten und des zweiten Netzelements so geführt, dass jedes der so gefertigten Netzelemente in der Längsrichtung des Schutznetzes mehrere Reihen an Seil-Kreuzungspunkten und in einer rechtwinklig zur Längsrichtung des Schutznetzes verlaufenden Querrichtung mehrere Spalten an Seil-Kreuzungspunkten aufweist, und das mindestens eine Verbindungsseil wird zwischen dem ersten und dem zweiten Netzelement so geführt, dass ein in sich geschlossenes Verbindungsnetzelement mit lediglich einer einzigen, in Querrichtung des Schutznetzes angeordneten Spalte an Verbindungsseil-Kreuzungspunkten erhalten wird.

Bei dieser Ausführungsform weisen die vorgefertigten Netzelemente eine gewisse Längenausdehnung auf. So ist es möglich, innerhalb kurzer Zeit ein längeres Netz herzustellen. Wenn das Netz in bevorzugter Weise bereits vorgefertigt transportiert werden soll, so ist es insbesondere bei einer gelenkigen Verbindung der jeweiligen Seilrandabschnitte der Netzelemente mit dem Verbindungsseil (z.B. durch Verschlaufen) möglich, das vorgefertigte Netz zum Transport quer zur Längsrichtung des Netzes wie eine Art "Ziehharmonika" zickzackartig zusammenzufalten. Auf diese Weise kann ein Stapel gebildet werden, in dem die einzelnen Netzelemente im Wesentlichen spannungsfrei aufeinander bzw. aneinander anliegen. Bei der Montage können Tragseile direkt in das gefaltete Netz eingeführt werden, was die Montage im Gelände und insbesondere bei beschränkten Platzverhältnissen erheblich vereinfacht, da zum Anbringen von Befestigungsseilen das Netz nicht in seiner Länge ausgebreitet werden muss.

Für den Fall, dass das Netz erst nach dem Transport zum Montageort fertiggestellt wird, erlaubt die obige Ausführungsform, dass die einzelnen Netzelemente einerseits gut transportiert werden können und andererseits eine rasche vor-Ort-Fertigung, da das Verbindungsnetzelement problemlos erst beim Verbinden der Netzelemente vor Ort gefertigt und somit mithilfe der vorgefertigten breiteren Netzelemente rasch ein längeres Netz hergestellt werden kann.

Gemäss einer weiteren bevorzugten Ausführungsform der Erfindung werden die Seile des ersten und des zweiten Netzelements so geführt, dass jedes der so gefertigten Netzelemente lediglich eine einzige, in einer zur Längsrichtung des Schutznetzes rechtwinklig verlaufenden Querrichtung des Schutznetzes angeordnete Spalte an Seil-Kreuzungspunkten aufweist, und das mindestens eine Verbindungsseil zwischen dem ersten und dem zweiten Netzelement so geführt wird, dass ein in sich geschlossenes Verbindungsnetzelement mit lediglich einer einzigen, in Querrichtung des Schutznetzes angeordneten Spalte an Verbindungsseil-Kreuzungspunkten erhalten wird.

Es sei an dieser Stelle nochmals erwähnt, dass sich das erfindungsgemässe Verfahren selbstverständlich nicht auf die Herstellung eines Netzes aus lediglich zwei über ein Verbindungsnetzelement verbundenen Netzelementen beschränkt, sondern im Sinne der Erfindung beliebig viele Netzelemente über jeweils ein zwischen zwei Netzelementen angeordnetes Verbindungsnetzelement verbunden werden können.

Da bei dieser Ausführungsform die einzelnen Netzelemente lediglich eine Spalte an Seil-Kreuzungspunkten aufweisen, sind ihre Grösse und ihr Gewicht im Vergleich zu Netzelementen mit mehreren Reihen und Spalten an Seil-Kreuzungspunkten bedeutend geringer.

Besonders bevorzugt ist bei der obigen Ausführungsform insbesondere eine gelenkige Verbindung der jeweiligen Seilrandabschnitte der Netzelemente mit dem Verbindungsseil (z.B. durch Verschlaufen des Verbindungsseils mit den jeweiligen Seilrandabschnitten der Netzelemente), da dadurch das im Werk vorgefertigte Netz zum Transport eng zusammengerollt werden kann oder die einzelnen Netz- und Verbindungsnetzelemente zickzackartig zusammengefaltet und aufeinander gestapelt werden können.

Für den Fall, dass das Netz erst am Montageort fertiggestellt wird, so hat die obige Ausführungsform den Vorteil, dass die Netz- und Verbindungsnetzelemente besonders gut gestapelt, gelagert und transportiert werden können. Zudem kann die Länge des Netzes am Montageort aufgrund der geringen Längenausdehnung der Netz- und Verbindungsnetzelemente exakt angepasst werden.

Gemäss einer weiteren bevorzugten Ausführungsform der Erfindung werden die Seile des ersten und des zweiten Netzelements so geführt, dass jedes der so gefertigten Netzelemente in der Längsrichtung des Schutznetzes mehrere Reihen an Seil-Kreuzungspunkten und in einer zur Längsrichtung des Schutznetzes rechtwinklig verlaufenden Querrichtung mehrere Spalten an Seil-Kreuzungspunkten aufweist, und das mindestens eine Verbindungsseil wird zwischen dem ersten und dem zweiten Netzelement so geführt, dass ein in sich geschlossenes Verbindungsnetzelement mit mehreren, in Längsrichtung des Schutznetzes angeordneten Reihen und mehreren, in Querrichtung des Schutznetzes angeordneten Spalten an Verbindungsseil-Kreuzungspunkten erhalten wird.

Bei dieser obigen Ausführungsform weisen sowohl die Netzelemente als auch das Verbindungsnetzelement eine gewisse Länge auf. So ist es möglich, bei der Fertigstellung im Werk oder gegebenenfalls am Montageort innerhalb kürzester Zeit ein längeres Netz herzustellen.

Besonders bevorzugt ist auch bei dieser Ausführungsform insbesondere eine gelenkige Verbindung der jeweiligen Seilrandabschnitte der Netzelemente mit dem Verbindungsseil (z.B. durch Verschlaufen des Verbindungsseils mit den jeweiligen Seilrandabschnitten der Netzelemente), da dadurch die einzelnen Netz- und Verbindungsnetzelemente zum Transport zickzackartig zusammengefaltet und gestapelt werden können.

Für den Fall, dass das Schutznetz erst am Montageort fertiggestellt wird, werden bei der obigen Ausführungsform bevorzugt sowohl die Netzelemente als auch die Verbindungsnetzelemente bereits vorgefertigt zum Montageort transportiert. Die Verbindung der jeweiligen Seilrandabschnitte der Netzelemente mit dem Verbindungsseil erfolgt dann bevorzugt durch Verschweissen, mit Hilfe von Führungsmitteln und/oder mit Hilfe von Klemmmitteln.

In einem weiteren Aspekt betrifft die vorliegende Erfindung zudem ein Schutznetz, das durch das Verfahren der vorliegenden Erfindung gemäss einem der Ansprüche 1 bis 13 hergestellt wird.

In einem weiteren Aspekt betrifft die vorliegende Erfindung ein Schutznetz, insbesondere zum Schutz vor Lawinen, Stein-, oder Holzschlag, bestehend aus
a) mindestens einem ersten Netzelement,
b) mindestens einem zweiten Netzelement und
c) mindestens einem Verbindungsnetzelement.

Das Schutznetz gemäss der vorliegenden Erfindung ist durch die nachfolgend beschriebenen Merkmale charakterisiert:
Das erste Netzelement ist individuell aus mindestens einem Seil in sich geschlossen gefertigt und weist mehrere Seil-Kreuzungspunkte auf, wo sich jeweils zwei Seilabschnitte kreuzen.

Das zweite Netzelement ist auch individuell aus mindestens einem Seil in sich geschlossen gefertigt und weist ebenso mehrere Seil-Kreuzungspunkte auf, wo sich jeweils zwei Seilabschnitte kreuzen. Das zweite Netzelement ist bezüglich des ersten Netzelements parallel und in einer Längsrichtung des Schutznetzes beabstandet angeordnet, so dass ein erster Netzrandabschnitt des ersten Netzelements einem zweiten Netzrandabschnitt des zweiten Netzelements zugewandt ist.

Das erste Netzelement weist des Weiteren mehrere im ersten Netzrandabschnitt angeordnete erste Seilrandabschnitte auf, die zwischen jeweils zwei Seil-Kreuzungspunkten verlaufen und dem zweiten Netzrandabschnitt zugewandt sind.

Das zweite Netzelement weist des Weiteren mehrere im zweiten Netzrandabschnitt angeordnete zweite Seilrandabschnitte auf, die zwischen jeweils zwei Seil-Kreuzungspunkten verlaufen und dem ersten Netzrandabschnitt zugewandt sind.

Das Verbindungselement ist aus mindestens einem Verbindungsseil in sich geschlossen gefertigt und weist mehrere Verbindungsseil-Kreuzungspunkte auf, wo sich jeweils zwei Verbindungsseilabschnitte kreuzen.

Die Netzelemente bzw. die Netzelemente und das Verbindungsseil bilden bevorzugt jeweils eine im Wesentlichen planare Netzstruktur aus.

Mithilfe des mindestens einen Verbindungsseils ist zumindest ein Teil der ersten Seilrandabschnitte des ersten Netzelements mit zumindest einem Teil der den ersten Seilrandabschnitten des ersten Netzelements zugewandten zweiten Seilrandabschnitte des zweiten Netzelements verbunden.

Bevorzugt sind mithilfe des mindestens einen Verbindungsseils alle ersten Seilrandabschnitte des ersten Netzelements mit allen zweiten Seilrandabschnitten des zweiten Netzelements verbunden.

Das erfindungsgemässe Schutznetz ist besonders vorteilhaft, da es aus einzelnen Netzelementen besteht, die individuell gefertigt, gelagert und transportiert werden können. Das Schutznetz kann insofern je nach Bedarf am Herstellungsort oder am Montageort fertiggestellt werden.

Des Weiteren kann die Grösse des Schutznetzes je nach Bedarf angepasst werden: Einerseits kann die Höhe und Länge des Schutznetzes über die Höhe und Länge der individuell gefertigten Netzelemente und/oder des Verbindungsnetzelements variiert werden und andererseits auch über die Anzahl an Netzelementen, die über Verbindungsnetzelemente miteinander verbunden werden. Das Netz kann auch im gefertigten Zustand mit zusätzlichen Netzelementen nachgerüstet werden, oder beschädigte Netzelemente können ausgetauscht werden.

Halte- und Befestigungsseile können zudem ohne weitere Verbindungsmittel direkt in das Netz eingefädelt werden, was wiederum eine Material- und Gewichtsreduktion ermöglicht.

Ausführungsformen des Schutznetzes, die durch die oben beschriebenen bevorzugten Ausführungsformen des erfindungsgemässen Verfahrens erhalten werden, sind auch für das Schutznetz der vorliegenden Erfindung als bevorzugte Ausführungsformen anzusehen.

In einem weiteren Aspekt betrifft die vorliegende Erfindung auch die Verwendung eines erfindungsgemässen Schutznetzes zum Schutz vor Lawinen, Stein- oder Holzschlag, Murgang, Hangmuren oder zur Böschungssicherung.

Die Verwendung eines erfindungsgemässen Schutznetzes ist insbesondere vorteilhaft, da seine Bestandteile einfach, rasch und unproblematisch hergestellt, gelagert und transportiert werden können und das Schutznetz sich auch in unwegsamen Gelände montieren lässt. Der Aufbau des erfindungsgemässen Schutznetzes erlaubt zudem, dass stark beanspruchte Netzelemente ausgewechselt werden können, ohne das gesamte Netz dafür demontieren zu müssen.

Das erfindungsgemässe Schutznetz ist als Schutznetz zum Schutz vor Lawinen, Stein- oder Holzschlag, Murgang, Hangmuren oder zur Böschungssicherung besonders geeignet, da aufgrund seiner Flexibilität die enormen Kräfte von fallenden grossen Lasten dynamisch aufgefangen werden. Zudem kann das für das Schutznetz verwendete Material an die spezifischen Umgebungseinflüsse angepasst werden, so dass das Schutznetz besonders wetter- und korrosionsbeständig ist.

Die vorliegende Erfindung ist in den folgenden Beispielen beschrieben, ohne dass diese jedoch einschränkend sein sollten.

Es zeigen rein schematisch:
- Fig. 1:: eine erste Ausführungsform eines erfindungsgemässen Schutznetzes bestehend aus einem ersten und einem zweiten Netzelement sowie einem Verbindungsnetzelement, bei welcher das erste und das zweite Netzelement in Bezug auf ihre Grösse und Form baugleich gefertigt sind;
- Fig. 2:: eine zweite Ausführungsform eines erfindungsgemässen Schutznetzes, bei welcher das erste und das zweite Netzelement sowie das Verbindungsnetzelement in Bezug auf ihre Grösse und Form baugleich gefertigt sind; und
- Fig. 3:: eine dritte Ausführungsform eines erfindungsgemässen Schutznetzes, bei welcher das erste und das zweite Netzelement sowie das Verbindungsnetzelement in Bezug auf ihre Grösse und Form baugleich gefertigt sind.

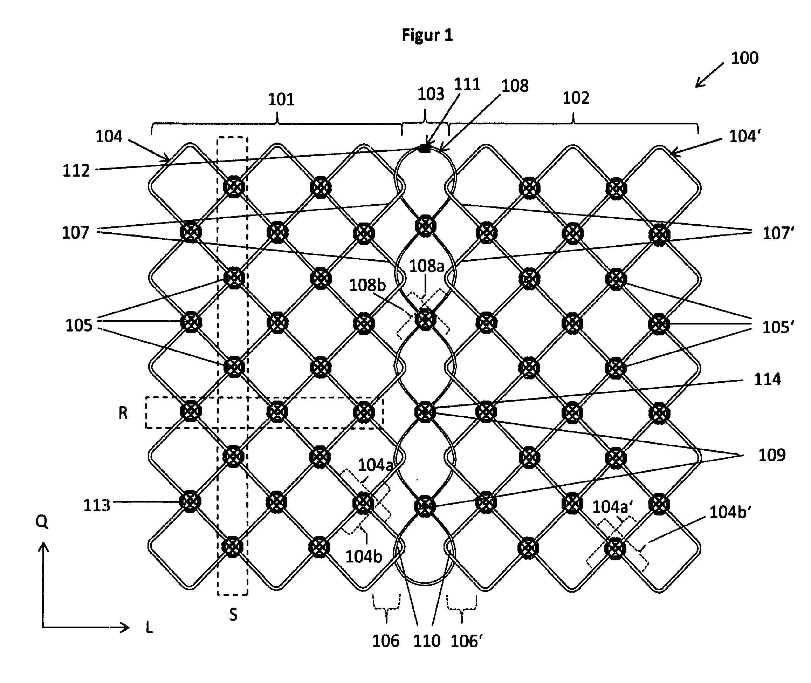

Bei allen in den Figuren 1 bis 3 dargestellten Ausführungsformen des erfindungsgemässen Schutznetzes sind folgende Merkmale verwirklicht:
Das erfindungsgemässe Schutznetz 100, 200, 300 ist aus einem ersten Netzelement 101, 201, 301, einem zweiten Netzelement 102, 202, 302 und einem Verbindungsnetzelement 103, 203, 303 gebildet.

Das erste Netzelement 101, 201, 301 ist individuell aus einem einzigen Seil 104, 204, 304 gefertigt und weist mehrere Seil-Kreuzungspunkte 105, 205, 305 auf, wo sich jeweils zwei Seilabschnitte 104a, 204a, 304a und 104b, 204b, 304b kreuzen. Analog ist das zweite Netzelement 102, 202, 302 individuell aus einem einzigen Seil 104', 204', 304' in sich geschlossen gefertigt und weist mehrere Seil-Kreuzungspunkte 105', 205', 305' auf, wo sich jeweils zwei Seilabschnitte 104a', 204a', 304a' und 104b', 204b', 304b' kreuzen.

Das zweite Netzelement 102, 202, 302 ist bezüglich des ersten Netzelements 101, 201, 301 parallel und in einer Längsrichtung L des Schutznetzes 100 beabstandet angeordnet, so dass ein erster Netzrandabschnitt 106, 206, 306 des ersten Netzelements 101, 201, 301 einem zweiten Netzrandabschnitt 106', 206', 306' des zweiten Netzelements 102, 202, 302 zugewandt ist.

Das erste Netzelement 101, 201, 301 weist zudem mehrere im ersten Netzrandabschnitt 106, 206, 306 angeordnete erste Seilrandabschnitte 107, 207, 307 auf, die zwischen jeweils zwei Seil-Kreuzungspunkten 105, 205, 305 verlaufen und dem zweiten Netzrandabschnitt 106', 206', 306' zugewandt sind.

Das zweite Netzelement 102, 202, 302 weist analog mehrere im zweiten Netzrandabschnitt 106', 206', 306' angeordnete zweite Seilrandabschnitte 107', 207', 307' auf, die zwischen jeweils zwei Seil-Kreuzungspunkten 105', 205', 305' verlaufen und dem ersten Netzrandabschnitt 106, 206, 306 zugewandt sind.

Die ersten Seilrandabschnitte 107, 207, 307 verlaufen demnach zwischen jeweils zwei Seil-Kreuzungspunkten 105, 205, 305 des ersten Netzelements 101, 201, 301 und sind im ersten Netzrandabschnitt 106, 206, 306 angeordnet. Analog dazu verlaufen also die zweiten Seilrandabschnitte 107', 207', 307' zwischen jeweils zwei Seil-Kreuzungspunkten 105', 205', 305' des zweiten Netzelements 102, 202, 302 und sind im zweiten Netzrandabschnitt 106', 206', 306' angeordnet.

Das Verbindungsnetzelement 103, 203, 303 ist aus einem einzigen Verbindungsseil 108, 208, 308 in sich geschlossen gefertigt und weist mehrere Verbindungsseil-Kreuzungspunkte 109, 209, 309 auf, wo sich zwei Verbindungsseilabschnitte 108a, 208a, 308a und 108b, 208b, 308b kreuzen.

Die ersten Seilrandabschnitte 107, 207, 307 sind den zweiten Seilrandabschnitten 107', 207', 307' zugewandt und mithilfe des Verbindungsseils 108, 208, 308 miteinander verbunden.

Die Verbindung der ersten Seilrandabschnitte 107, 207, 307 des ersten Netzelements 101, 201, 301 und der zweiten Seilrandabschnitte 107', 207', 307' des zweiten Netzelements 102, 202, 302 mit dem Verbindungsseil 108, 208, 308 erfolgt an Verbindungspunkten 110, 210, 310, die sich jeweils zwischen den jeweiligen Seil-Kreuzungspunkten 105, 105', 205, 205', 305, 305' der verbundenen Seilrandabschnitte 107, 107', 207, 207', 307, 307' befinden.

Bei den gezeigten Ausführungsformen sind jeweils alle ersten Seilrandabschnitte 107, 207, 307 mithilfe des Verbindungsseils 108, 208, 308 mit den jeweiligen, den ersten Seilrandabschnitten 107, 207, 307 gegenüberliegenden zweiten Seilrandabschnitten 107', 207', 307' verbunden. Dabei sind alle ersten Seilrandabschnitte 107, 207, 307 des ersten Netzelements 101, 201, 301 und alle zweiten Seilrandabschnitte 107', 207', 307' des zweiten Netzelements 102, 202, 302 mit dem Verbindungsseil 108, 208, 308 an den Verbindungspunkten 110, 210, 310 durch Verschlaufen verbunden.

Alternativ können die ersten Seilrandabschnitte des ersten Netzelements und die zweiten Seilrandabschnitte des zweiten Netzelements mit dem Verbindungsseil durch Verschweissen, mit Hilfe von Führungsmitteln und/oder mit Hilfe von Press- oder Klemmmitteln verbunden sein (nicht gezeigt).

Die Seile 104, 104', 204, 204', 304, 304' des ersten Netzelements 101, 201, 301 und/oder des zweiten Netzelements 102, 202, 302 und/oder das Verbindungsseil 108, 208, 308 des Verbindungsnetzelements 103, 203, 303 sind vorzugsweise aus rostfreiem Stahldraht hergestellt.

Sich kreuzende Seilabschnitte 104a, 204a, 304a und 104b, 204b, 304b der Seile 104, 104', 204, 204', 304, 304' sind an den Kreuzungspunkten 105, 105', 205, 205', 305, 305' mittels Kreuzklemmen 113, 213, 313 verbunden. Ebenso sind sich kreuzende Verbindungsseilabschnitte 108a, 208a, 308a und 108b, 208b, 308b des Verbindungsseils 108, 208, 308 an Verbindungsseil-Kreuzungspunkten 109, 209, 309 mittels Kreuzklemmen 114, 214, 314 verbunden.

Bei der in Figur 1 gezeigten ersten Ausführungsform sind das erste Netzelement 101 und das zweite Netzelement 102 in Bezug auf ihre Grösse und Form baugleich gefertigt. Die gezeigte Form des ersten Netzelements 101 und des zweiten Netzelements 102 ist dem Fachmann als Diagonalnetz oder Currynetz bekannt. Sie weisen zudem jeweils in Längsrichtung L des Schutznetzes 100 neun Reihen R sowie in einer zur Längsrichtung L senkrecht verlaufenden Querrichtung Q des Schutznetzes 100 jeweils fünf Spalten S an Seil-Kreuzungspunkten 105, 105' auf.

Hingegen ist das Verbindungsnetzelement 103 so gefertigt, dass es lediglich eine einzige in Querrichtung Q des Schutznetzes 100 angeordnete Spalte S an Verbindungsseil-Kreuzungspunkten 109 aufweist.

Die beiden Enden des Verbindungsseils 108 sind einander entgegengesetzt überlappend angeordnet und in ihrem Überlappungsbereich 111 mittels einer Presshülse 112 nicht lösbar verbunden. In analoger Art und Weise können die Enden der Seile der Netzelemente miteinander nicht lösbar verbunden sein (nicht gezeigt).

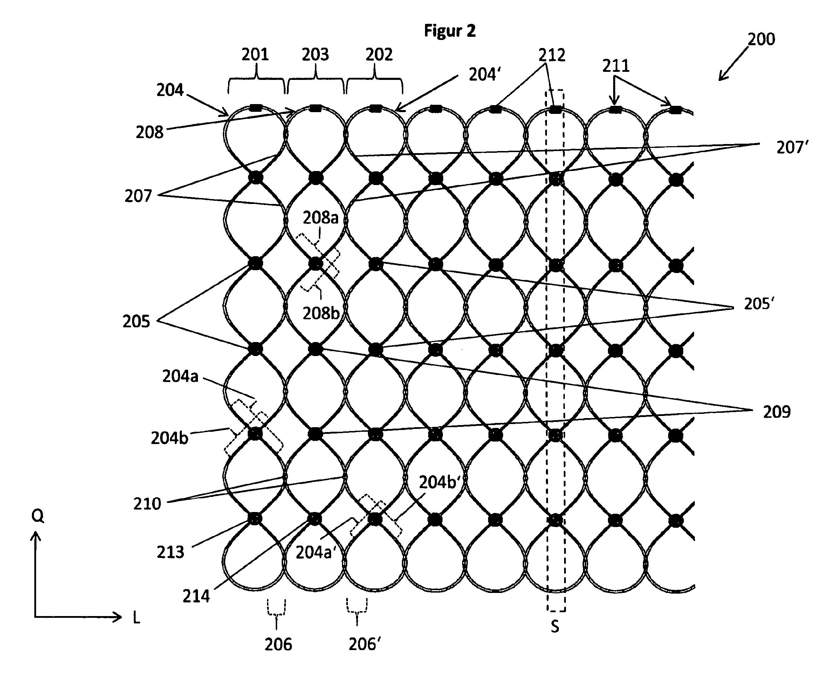

Bei der in der Figur 2 gezeigten zweiten Ausführungsform des Schutznetzes 200 sind sowohl das erste Netzelement 201 und das zweite Netzelement 202 als auch das Verbindungsnetzelement 203 in Bezug auf ihre Grösse und Form baugleich gefertigt und vorzugsweise jeweils aus einem einzigen Seil gefertigt.

Das erste Netzelement 201 und das zweite Netzelement 202 weisen jeweils lediglich eine, in der Querrichtung Q des Schutznetzes 200 angeordnete Spalte S an Seil-Kreuzungspunkten 205, 205' auf. Analog weist auch das Verbindungsnetzelement 203 lediglich eine einzige in Querrichtung Q des Schutznetzes 200 angeordnete Spalte S an Verbindungsseil-Kreuzungspunkten 209 auf.

Die jeweiligen Enden der Seile (204, 204') und die jeweiligen Enden des Verbindungsseils 108 sind einander entgegengesetzt überlappend angeordnet und in ihrem Überlappungsbereich 211 mittels einer Presshülse 212 nicht lösbar verbunden.

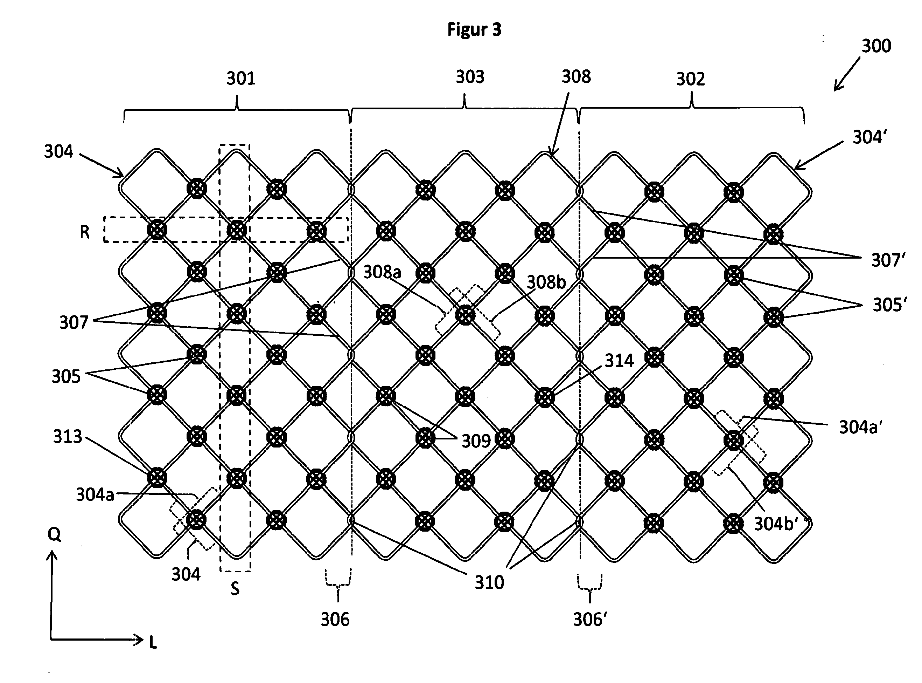

Bei der in Figur 3 gezeigten dritten Ausführungsform sind wiederum sowohl das erste Netzelement 301 und das zweite Netzelement 302 als auch das dritte Verbindungsnetzelement 303 in Bezug auf ihre Grösse und Form baugleich gefertigt und vorzugsweise jeweils aus einem einzigen Seil gefertigt. Die gezeigte Form des ersten Netzelements 301, des zweiten Netzelements 302, sowie des Verbindungsnetzelements 303 ist dem Fachmann als Diagonalnetz oder Currynetz bekannt. Das erste Netzelement 301 und das zweite Netzelement 302 weisen jeweils in Längsrichtung L neun Reihen R sowie in Querrichtung Q des Schutznetzes 300 fünf Spalten S an Seil-Kreuzungspunkten 305, 305' auf. Analog weist auch das verbindungsnetzelement 303 in Längsrichtung L neun Reihen R sowie in Querrichtung Q des Schutznetzes 300 fünf Spalten S an Verbindungsseil-Kreuzungspunkten 309 auf.

Die jeweiligen Enden der Seile 304, 304' und die jeweiligen Enden des Verbindungsseils 308 sind jeweils nicht lösbar verbunden.

Alternativ können das erste Netzelement und/oder das zweite Netzelement und/oder das Verbindungnetzelement auch jeweils individuell aus mehreren Seilen, bzw. Verbindungsseilen gefertigt sein (nicht gezeigt).

Darüber hinaus wäre es auch möglich, dass lediglich ein Teil, beispielsweise die Hälfte, der sich kreuzenden Seilabschnitte der Seile an Kreuzungspunkten und/oder sich kreuzenden Verbindungsseilabschnitte des Verbindungsseils an Verbindungsseil-Kreuzungspunkten mittels Klemmen, insbesondere Kreuzklemmen, und/oder Presshülsen und/oder durch Verschweissen verbunden ist (nicht gezeigt).

Gemäss einer nicht gezeigten Ausführungsform können das erste und/oder das zweite Netzelement und/oder das Verbindungsnetzelement eine unterschiedliche Höhe aufweisen. Dies bedeutet, dass die Netzelemente und/oder das Verbindungsnetzelement in Längsrichtung des Schutznetzes eine unterschiedliche Anzahl an Reihen an Kreuzungspunkten aufweisen können. Dadurch wird eine besonders gute Anpassung des Schutznetzes an die örtlichen Gegebenheiten ermöglicht.

Gemäss einer alternativen nicht gezeigten Ausführungsform können das erste und das zweite Netzelement in Bezug auf ihre Höhe und Form baugleich gefertigt sein, jedoch eine unterschiedliche Länge aufweisen. Dies bedeutet, dass die beiden Netzelemente in Längsrichtung des Schutznetzes eine gleiche Anzahl an Reihen an Kreuzungspunkten aufweisen. In Querrichtung des Schutznetzes müssen bei dieser Ausführungsform die Anzahl Spalten an Kreuzungspunkten des ersten Netzelements nicht gleich sein, wie diejenige des zweiten Netzelements.

## Patentansprüche

1. Verfahren zur Herstellung eines Schutznetzes (100, 200, 300), insbesondere zum Schutz vor Lawinen, Stein- oder Holzschlag, Murgang, Hangmuren oder zur Böschungssicherung, bei welchem Verfahren
- zunächst mindestens ein erstes Netzelement (101, 201, 301) und mindestens ein zweites Netzelement (102, 202, 302) individuell aus jeweils mindestens einem Seil (104, 204, 304) in sich geschlossenen gefertigt werden und dabei die Seile (104, 204, 304, 104', 204', 304') des ersten Netzelements (101, 201, 301) und des zweiten Netzelements (102, 202, 302) so geführt werden, dass jedes der so gefertigten Netzelemente mehrere Seil-Kreuzungspunkte (105, 105', 205, 205', 305, 305'), wo sich jeweils zumindest zwei Seilabschnitte (104a, 204a, 304a und 104b, 204b, 304b) kreuzen, aufweist, und
- das erste Netzelement (101, 201, 301) und das zweite Netzelement (102, 202, 302) zueinander parallel und in einer Längsrichtung (L) des zu bildenden Schutznetzes (100, 200, 300) voneinander beabstandet angeordnet werden, so dass ein erster Netzrandabschnitt (106, 206, 306) des ersten Netzelements (101, 201, 301) einem zweiten Netzrandabschnitt (106', 206', 306') des zweiten Netzelements (102, 202, 302) zugewandt ist,
wobei das erste Netzelement (101, 201, 301) mehrere im ersten Netzrandabschnitt (106, 206, 306) angeordnete erste Seilrandabschnitte (107, 107, 107), die zwischen jeweils zwei Seil-Kreuzungspunkten (105, 205, 305) verlaufen und dem zweiten Netzrandabschnitt (106', 206', 306') zugewandt sind, aufweist und das zweite Netzelement (102, 202, 302) mehrere im zweiten Netzrandabschnitt (106', 206', 306') angeordnete zweite Seilrandabschnitte (107', 207', 307'), die zwischen jeweils zwei Seil-Kreuzungspunkten (105, 105', 205, 205', 305, 305') verlaufen und dem ersten Netzrandabschnitt (106, 206, 306) zugewandt sind, aufweist,
und dann
- mithilfe mindestens eines Verbindungsseils (108, 208, 308) zumindest ein Teil der ersten Seilrandabschnitte (107, 207, 307) des ersten Netzelements (101, 201, 301) mit zumindest einem Teil der den ersten Seilrandabschnitten (107, 207, 307) zugewandten zweiten Seilrandabschnitten (107', 207', 307') des zweiten Netzelements (102, 202, 302) verbunden werden, wobei
- das mindestens eine Verbindungsseil (108, 208, 308) zwischen dem ersten Netzelement (101, 201, 301) und dem zweiten Netzelement (102, 202, 302) so geführt wird, dass ein in sich geschlossenes Verbindungsnetzelement (103, 203, 303) mit mehreren Verbindungsseil-Kreuzungspunkten (109, 209, 309), wo sich jeweils zumindest zwei Verbindungsseilabschnitte (108a, 208a, 306a und 108b, 208b, 308b) kreuzen, erhalten wird.

2. Verfahren gemäss Anspruch 1, **dadurch gekennzeichnet, dass** zumindest das erste Netzelement (101, 201, 301) und das zweite Netzelement (102, 202, 302) jeweils aus nur einem einzigen Seil (104, 104', 204, 204', 304, 304') gefertigt werden.

3. Verfahren gemäss Anspruch 1 oder 2, **dadurch gekennzeichnet, dass** lediglich ein einziges Verbindungsseil (108, 208, 308) zwischen dem ersten Netzelement (101, 201, 301) und dem zweiten Netzelement (102, 202, 302) geführt wird.

4. Verfahren gemäss einem der Ansprüche 1 bis 3, **dadurch gekennzeichnet, dass** die Verbindung der jeweiligen Seilrandabschnitte (107, 107', 207, 207', 307, 307') des ersten Netzelements (101, 201, 301) und des zweiten Netzelements (102, 202, 302) mit dem Verbindungsseil (108, 208, 308) durch Verschlaufen, Verschweissen, mit Hilfe von Führungsmitteln und/oder mit Hilfe von Klemmmitteln erfolgt.

5. Verfahren gemäss einem der Ansprüche 1 bis 4, **dadurch gekennzeichnet, dass** die ersten Netzrandabschnitte (106, 206, 306) des ersten Netzelements (101, 201, 301) und/oder die zweiten Netzrandabschnitte (106', 206', 306') des zweiten Netzelements (102, 202, 302) relativ zum Verbindungseil (108, 208, 308) des Verbindungsnetzelements (103, 203, 303) beweglich sind.

6. Verfahren gemäss einem der Ansprüche 1 bis 5, **dadurch gekennzeichnet, dass** die Enden der Seile (104, 204, 304) des ersten Netzelements (101, 201, 301) und/oder die Enden der Seile (104', 204', 304') des zweiten Netzelements (102, 202, 302) und/oder die Enden des Verbindungsseils (108, 208, 308) des Verbindungsnetzelements (103, 203, 303) jeweils entgegengesetzt gerichtet sind und mittels einer nicht lösbaren Verbindung (112, 212) in sich geschlossen werden, vorzugweise mittels Klemmen.

7. Verfahren gemäss einem der Ansprüche 1 bis 6, **dadurch gekennzeichnet, dass** sich kreuzende Seilabschnitte (104a, 104a', 204a, 204a', 304a, 304a' und 104b, 104b', 204b, 204b', 304b, 304b') der Seile (104, 104', 204, 204', 304, 304') an mindestens einem Teil der Seil-Kreuzungspunkte (105, 105', 205, 205', 305, 305') und/oder sich kreuzende Seilabschnitte (108a, 108b, 208a, 208b, 308a, 308b) der Verbindungsseile (108, 208, 308) an mindestens einem Teil der Verbindungsseil-Kreuzungspunkte (109, 209, 309) durch Verschweissen und/oder Vergiessen und/oder mittels Presshülsen und/oder mittels Klemmen, insbesondere mittels Bügel- und/oder Kreuzklemmen (113, 114, 213, 214, 313, 314) verbunden werden.

8. Verfahren gemäss einem der Ansprüche 1 bis 7, **dadurch gekennzeichnet, dass** für die Herstellung der Netzelemente (101, 201, 301, 102, 202, 302) und/oder des Verbindungsnetzelements (103, 203, 303) Drahtseile aus Stahl verwendet werden, bevorzugt aus verzinktem Stahl.

9. Verfahren gemäss einem der Ansprüche 1 bis 8, **dadurch gekennzeichnet, dass** das erste Netzelement (101, 201, 301) und das zweite Netzelement (102, 202, 302) in Bezug auf ihre Grösse und Form baugleich gefertigt werden.

10. Verfahren gemäss Anspruch 9, **dadurch gekennzeichnet, dass** das erste Netzelement (101, 201, 301), das zweite Netzelement (102, 202, 302) und das Verbindungsnetzelement (103, 203, 303) in Bezug auf ihre Grösse und Form baugleich gefertigt werden.

11. Verfahren gemäss einem der Ansprüche 1 bis 9, **dadurch gekennzeichnet, dass** die Seile (104, 104') des ersten Netzelements (101) und des zweiten Netzelements (102) so geführt werden, dass jedes der so gefertigten Netzelemente in der Längsrichtung (L) des Schutznetzes (100) mehrere Reihen (R) an Seil-Kreuzungspunkten (105, 105') und in einer rechtwinklig zur Längsrichtung (L) des Schutznetzes (100) verlaufenden Querrichtung (Q) mehrere Spalten (S) an Seil-Kreuzungspunkten (105, 105') aufweist, und
das mindestens eine Verbindungsseil (108) zwischen dem ersten Netzelement (101) und dem zweiten Netzelement (102) so geführt wird, dass ein in sich geschlossenes Verbindungsnetzelement (103) mit lediglich einer einzigen, in Querrichtung (Q) des Schutznetzes (100,) angeordneten Spalte (S) an Verbindungsseil-Kreuzungspunkten (109) erhalten wird.

12. Verfahren gemäss einem der Ansprüche 1 bis 10, **dadurch gekennzeichnet, dass** die Seile (204, 204') des ersten Netzelements (201) und des zweiten Netzelements (202) so geführt werden, dass jedes der so gefertigten Netzelemente lediglich eine einzige, in einer zur Längsrichtung (L) des Schutznetzes (200) rechtwinklig angeordneten Querrichtung (Q) angeordnete Spalte (S) an Seil-Kreuzungspunkten (205, 205') aufweist, und
das mindestens eine Verbindungsseil (208) zwischen dem ersten Netzelement (201) und dem zweiten Netzelement (202) so geführt wird, dass ein in sich geschlossenes Verbindungsnetzelement (203) mit lediglich einer einzigen, in Querrichtung (Q) des Schutznetzes (200) angeordneten Spalte (S) an Verbindungsseil-Kreuzungspunkten (209) erhalten wird.

13. Verfahren gemäss einem der Ansprüche 1 bis 10, **dadurch gekennzeichnet, dass** die Seile (304, 304') des ersten Netzelements (301) und des zweiten Netzelements (302) so geführt werden, dass jedes der so gefertigten Netzelemente in der Längsrichtung (L) des Schutznetzes (300) mehrere Reihen (R) an Seil-Kreuzungspunkten (305, 305') und in einer zur Längsrichtung (L) des Schutznetzes (300) rechtwinklig angeordneten Querrichtung (Q) mehrere Spalten (S) an Seil-Kreuzungspunkten (305, 305') aufweist, und
das mindestens eine Verbindungsseil (308) zwischen dem ersten Netzelement (301) und dem zweiten Netzelement (302) so geführt wird, dass ein in sich geschlossenes Verbindungsnetzelement (303) mit mehreren, in Längsrichtung (L) des Schutznetzes (100) angeordneten Reihen (R) und mehreren, in Querrichtung (Q) des Schutznetzes angeordneten Spalten (S) an Verbindungsseil-Kreuzungspunkten (309) erhalten wird.

14. Schutznetz (100, 200, 300), insbesondere zum Schutz vor Lawinen, Stein- oder Holzschlag, Murgang, Hangmuren oder zur Böschungssicherung, bestehend aus
a) mindestens einem ersten Netzelement (101, 201, 301), das individuell aus mindestens einem Seil (104, 204, 304) in sich geschlossen gefertigt ist und mehrere Seil-Kreuzungspunkte (105, 205, 305), wo sich jeweils zumindest zwei Seilabschnitte (104a, 204a, 304a und 104b, 204b, 304b) kreuzen, aufweist, und
b) mindestens einem zweiten Netzelement (102, 202, 302), das individuell aus mindestens einem Seil (104', 204', 304') in sich geschlossen gefertigt ist, mehrere Seil-Kreuzungspunkte (105', 205', 305'), wo sich jeweils zumindest zwei Seilabschnitte 104a', 204a', 304a' und 104b', 204b', 304b') kreuzen, aufweist und bezüglich des ersten Netzelements (101, 201, 301) parallel und in einer Längsrichtung (L) des Schutznetzes (100, 200, 300) beabstandet angeordnet ist, so dass ein erster Netzrandabschnitt (106, 206, 306) des ersten Netzelements (101, 201, 301) einem zweiten Netzrandabschnitt (106', 206', 306') des zweiten Netzelements (102, 202, 302) zugewandt ist,
wobei das erste Netzelement (101, 201, 301) mehrere im ersten Netzrandabschnitt (106, 206, 306) angeordnete erste Seilrandabschnitte (107, 207, 307), die zwischen jeweils zwei Seil-Kreuzungspunkten (105, 205, 305) verlaufen und dem zweiten Netzrandabschnitt (106', 206', 306') zugewandt sind, aufweist, und
wobei das zweite Netzelement (102, 202, 302) mehrere im zweiten Netzrandabschnitt (106', 206', 306') angeordnete zweite Seilrandabschnitte (107', 207', 307'), die zwischen jeweils zwei Seil-Kreuzungspunkten (105', 205', 305') verlaufen und dem ersten Netzrandabschnitt (106, 206, 306) zugewandt sind, aufweist,
sowie
c) mindestens einem Verbindungsnetzelement (103, 203, 303), das aus mindestens einem Verbindungsseil (108, 208, 308) in sich geschlossen gefertigt ist und mehrere Verbindungsseil-Kreuzungspunkte (109, 209, 309), wo sich jeweils zumindest zwei Verbindungsseilabschnitte (108a, 208a, 308a und 108b, 208b, 308b) kreuzen, aufweist,
wobei mithilfe des mindestens einen Verbindungsseils (108, 208, 308) zumindest ein Teil der ersten Seilrandabschnitte (107, 207, 307) des ersten Netzelements (101, 201, 301) mit zumindest einem Teil der den ersten Seilrandabschnitten (107, 207, 307) des ersten Netzelements (101, 201, 301) zugewandten zweiten Seilrandabschnitte (107', 207', 307') des zweiten Netzelements (102, 202, 302) verbunden ist.

15. Verwendung eines Schutznetzes (100, 200, 300) gemäss Anspruch 14 zum Schutz vor Lawinen, Stein- oder Holzschlag, Murgang, Hangmuren oder zur Böschungssicherung.

## Claims

1. A method for producing a safety net (100, 200, 300), in particular for protection from avalanches, falling rock or timber, mudslides, earth flows, or for slope stabilization, in which method
- firstly at least a first net element (101, 201, 301) and at least a second net element (102, 202, 302) are individually produced, self-contained, from respectively at least one rope (104, 204, 304), and the ropes (104, 204, 304, 104', 204', 304') of the first net element (101, 201, 301) and of the second net element (102, 202, 302) are here guided such that each of the net elements thus produced has a plurality of rope junctions (105, 105', 205, 205', 305, 305'), where respectively at least two rope portions (104a, 204a, 304a and 104b, 204b, 304b) intersect, and
- the first net element (101, 201, 301) and the second net element (102, 202, 302) are arranged parallel to each other and at a distance apart in a longitudinal direction (L) of the safety net (100, 200, 300) to be formed, so that a first net edge portion (106, 206, 306) of the first net element (101, 201, 301) is facing a second net edge portion (106', 206', 306') of the second net element (102, 202, 302),
wherein the first net element (101, 201, 301) has a plurality of first rope edge portions (107, 107, 107) arranged in the first net edge portion (106, 206, 306), which run between respectively two rope junctions (105, 205, 305) and are facing the second net edge portion (106', 206', 306'), and the second net element (102, 202, 302) has a plurality of second rope edge portions (107', 207', 307'), arranged in the second net edge portion (106', 206', 306'), which run between respectively two rope junctions (105, 105', 205, 205', 305, 305') and are facing the first net edge portion (106, 206, 306),
and then
- with the aid of at least one connecting rope (108, 208, 308), at least a part of the first rope edge portions (107, 207, 307) of the first net element (101, 201, 301) is connected to at least a part of the second rope edge portions (107', 207', 307'), facing the first rope edge portions (107, 207, 307), of the second net element (102, 202, 302), wherein
- the at least one connecting rope (108, 208, 308) is guided between the first net element (101, 201, 301) and the second net element (102, 202, 302) such that a self-contained connecting net element (103, 203, 303) having a plurality of connecting rope junctions (109, 209, 309), where respectively at least two connecting rope portions (108a, 208a, 306a and 108b, 208b, 308b) intersect, is obtained.

2. The method as claimed in claim 1, wherein at least the first net element (101, 201, 301) and the second net element (102, 202, 302) are produced respectively from just a single rope (104, 104', 204, 204', 304, 304').

3. The method as claimed in claim 1 or 2, wherein just a single connecting rope (108, 208, 308) is guided between the first net element (101, 201, 301) and the second net element (102, 202, 302).

4. The method as claimed in one of claims 1 to 3, wherein the connection of the respective rope edge portions (107, 107', 207, 207', 307, 307') of the first net element (101, 201, 301) and of the second net element (102, 202, 302) to the connecting rope (108, 208, 308) is realized by looping, welding, with the aid of guide means and/or with the aid of clamping means.

5. The method as claimed in one of claims 1 to 4, wherein the first net edge portions (106, 206, 306) of the first net element (101, 201, 301) and/or the second net edge portions (106', 206', 306') of the second net element (102, 202, 302) are movable relative to the connecting rope (108, 208, 308) of the connecting net element (103, 203, 303).

6. The method as claimed in one of claims 1 to 5, wherein the ends of the ropes (104, 204, 304) of the first net element (101, 201, 301) and/or the ends of the ropes (104', 204', 304') of the second net element (102, 202, 302) and/or the ends of the connecting rope (108, 208, 308) of the connecting net element (103, 203, 303) are respectively oppositely directed and are self-contained by means of a permanent connection (112, 212), preferably by means of clamps.

7. The method as claimed in one of claims 1 to 6, wherein intersecting rope portions (104a, 104a', 204a, 204a', 304a, 304a' and 104b, 104b', 204b, 204b', 304b, 304b') of the ropes (104, 104', 204, 204', 304, 304'), at at least a part of the rope junctions (105, 105', 205, 205', 305, 305'), and/or intersecting rope portions (108a, 108b, 208a, 208b, 308a, 308b) of the connecting ropes (108, 208, 308), at at least a part of the connecting rope junctions (109, 209, 309), are connected by welding and/or potting and/or by means of ferrules and/or by means of clamps, in particular by means of stirrup clamps and/or cross clamps (113, 114, 213, 214, 313, 314).

8. The method as claimed in one of claims 1 to 7, wherein, for the production of the net elements (101, 201, 301, 102, 202, 302) and/or of the connecting net element (103, 203, 303), wire ropes of steel, preferably of galvanized steel, are used.

9. The method as claimed in one of claims 1 to 8, wherein the first net element (101, 201, 301) and the second net element (102, 202, 302) are produced in identical construction in terms of their size and shape.

10. The method as claimed in claim 9, wherein the first net element (101, 201, 301), the second net element (102, 202, 302) and the connecting net element (103, 203, 303) are produced in identical construction in terms of their size and shape.

11. The method as claimed in one of claims 1 to 9, wherein the ropes (104, 104') of the first net element (101) and of the second net element (102) are guided such that each of the net elements thus produced has in the longitudinal direction (L) of the safety net (100) a plurality of rows (R) of rope junctions (105, 105') and in a transverse direction (Q) running at right angles to the longitudinal direction (L) of the safety net (100) a plurality of columns (S) of rope junctions (105, 105'), and
the at least one connecting rope (108) is guided between the first net element (101) and the second net element (102) such that a self-contained connecting net element (103) having just a single column (S) of connecting rope junctions (109), which column is arranged in the transverse direction (Q) of the safety net (100), is obtained.

12. The method as claimed in one of claims 1 to 10, wherein the ropes (204, 204') of the first net element (201) and of the second net element (202) are guided such that each of the net elements thus produced has just a single column (S) of rope junctions (205, 205'), which column is arranged in a transverse direction (Q) arranged at right angles to the longitudinal direction (L) of the safety net (200), and
the at least one connecting rope (208) is guided between the first net element (201) and the second net element (202) such that a self-contained connecting net element (203) having just a single column (S) of connecting rope junctions (209), which column is arranged in the transverse direction (Q) of the safety net (200), is obtained.

13. The method as claimed in one of claims 1 to 10, wherein the ropes (304, 304') of the first net element (301) and of the second net element (302) are guided such that each of the net elements thus produced has in the longitudinal direction (L) of the safety net (300) a plurality of rows (R) of rope junctions (305, 305') and in a transverse direction (Q) arranged at right angles to the longitudinal direction (L) of the safety net (300) a plurality of columns (S) of rope junctions (305, 305'), and
the at least one connecting rope (308) is guided between the first net element (301) and the second net element (302) such that a self-contained connecting net element (303) having a plurality of rows (R), arranged in the longitudinal direction (L) of the safety net (300), and a plurality of columns (S), arranged in the transverse direction (Q) of the safety net, of connecting rope junctions (309) is obtained.

14. A safety net (100, 200, 300), in particular for protection from avalanches, falling rock or timber, mudslides, earth flows, or for slope stabilization, consisting of
a) at least a first net element (101, 201, 301), which is individually produced, self-contained, from at least one rope (104, 204, 304) and has a plurality of rope junctions (105, 205, 305), where respectively at least two rope portions (104a, 204a, 304a and 104b, 204b, 304b) intersect, and
b) at least a second net element (102, 202, 302), which is individually produced, self-contained, from at least one rope (104', 204', 304') and has a plurality of rope junctions (105', 205', 305'), where respectively at least two rope portions (104a', 204a', 304a' and 104b', 204b', 304b') intersect, and is arranged with respect to the first net element (101, 201, 301) in parallel and at a distance apart in a longitudinal direction (L) of the safety net (100, 200, 300), so that a first net edge portion (106, 206, 306) of the first net element (101, 201, 301) is facing a second net edge portion (106', 206', 306') of the second net element (102, 202, 302),
wherein the first net element (101, 201, 301) has a plurality of first rope edge portions (107, 207, 307) arranged in the first net edge portion (106, 206, 306), which run between respectively two rope junctions (105, 205, 305) and are facing the second net edge portion (106', 206', 306'), and
wherein the second net element (102, 202, 302) has a plurality of second rope edge portions (107', 207', 307') arranged in the second net edge portion (106', 206', 306'), which run between respectively two rope junctions (105', 205', 305') and are facing the first net edge portion (106, 206, 306),
and
c) at least one connecting net element (103, 203, 303), which is produced, self-enclosed, from at least one connecting rope (108, 208, 308) and has a plurality of connecting rope junctions (109, 209, 309), where respectively at least two connecting rope portions (108a, 208a, 308a and 108b, 208b, 308b) intersect, wherein, with the aid of the at least one connecting rope (108, 208, 308), at least a part of the first rope edge portions (107, 207, 307) of the first net element (101, 201, 301) is connected to at least a part of the second rope edge portions (107', 207', 307') of the second net element (102, 202, 302) which are facing the first rope edge portions (107, 207, 307) of the first net element (101, 201, 301).

15. The use of a safety net (100, 200, 300) as claimed in claim 14 for protection from avalanches, falling rock or timber, mudslides, earth flows, or for slope stabilization.

## Revendications

1. Procédé pour la fabrication d'un filet de protection (100, 200, 300), en particulier pour la protection contre les avalanches, les chutes de pierres ou les chutes de bois, les laves torrentielles, les coulées de boue ou pour la sécurisation de talus, procédé dans lequel
- on fabrique d'abord au moins un premier élément de filet (101, 201, 301) et au moins un deuxième élément de filet (102, 202, 302) fermés sur eux-mêmes individuellement, chacun à partir d'au moins un élément de câble (104, 204, 304), et on conduit en l'occurrence les câbles (104, 204, 304, 104', 204', 304') du premier élément de filet (101, 201, 301) et du deuxième élément de filet (102, 202, 302) de telle manière que chacun des éléments de filet ainsi fabriqués présente plusieurs points de croisement de câbles (105, 105', 205, 205', 305, 305'), où chaque fois au moins deux parties de câble (104a, 204a, 304a et 104b, 204b, 304b) se croisent, et
- on dispose le premier élément de filet (101, 201, 301) et le deuxième élément de filet (102, 202, 302) parallèlement l'un à l'autre et à distance l'un de l'autre dans une direction longitudinale (L) du filet de protection à former (100, 200, 300), de telle manière qu'une première partie de bord de filet (106, 206, 306) du premier élément de filet (101, 201, 301) soit tournée vers une deuxième partie de bord de filet (106', 206', 306') du deuxième élément de filet (102, 202, 302),
dans lequel le premier élément de filet (101, 201, 301) présente plusieurs premières parties de bord de câbles (107, 107, 107) disposées dans la première partie de bord de filet (106, 206, 306), qui s'étendent entre chaque fois deux points de croisement de câbles (105, 205, 305) et qui sont tournées vers la deuxième partie de bord de filet (106', 206', 306'), et le deuxième élément de filet (102, 202, 302) présente plusieurs deuxièmes parties de bord de câbles (107', 207', 307') disposées dans la deuxième partie de bord de filet (106', 206', 306'), qui s'étendent entre chaque fois deux points de croisement de câbles (105, 105', 205, 205', 305, 305') et qui sont tournées vers la première partie de bord de filet (106, 206, 306),
et ensuite
- à l'aide d'au moins un câble de liaison (108, 208, 308), on relie au moins une partie des premières parties de bord de câbles (107, 207, 307) du premier élément de filet (101, 201, 301) à au moins une partie des deuxièmes parties de bord de câbles (107', 207', 307') du deuxième élément de filet (102, 202, 302) tournées vers les premières parties de bord de câble (107, 207, 307), dans lequel
- on conduit ledit au moins un câble de liaison (108, 208, 308) entre le premier élément de filet (101, 201, 301) et le deuxième élément de filet (102, 202, 302) de telle manière que l'on obtienne un élément de filet de liaison (103, 203, 303) fermé sur lui-même avec plusieurs points de croisement de câble de liaison (109, 209, 309), où chaque fois au moins deux parties de câble de liaison (108a, 208a, 306a et 108b, 208b, 308b) se croisent.

2. Procédé selon la revendication 1, **caractérisé en ce que** l'on fabrique au moins le premier élément de filet (101, 201, 301) et le deuxième élément de filet (102, 202, 302) respectivement à partir d'un seul câble (104, 104', 204, 204', 304, 304').

3. Procédé selon la revendication 1 ou 2, **caractérisé en ce que** l'on conduit uniquement un seul câble de liaison (108, 208, 308) entre le premier élément de filet (101, 201, 301) et le deuxième élément de filet (102, 202, 302).

4. Procédé selon l'une des revendications 1 à 3, **caractérisé en ce que** l'on effectue la liaison des parties de bord de câbles respectives (107, 107', 207, 207', 307, 307') du premier élément de filet (101, 201, 301) et du deuxième élément de filet (102, 202, 302) avec le câble de liaison (108, 208, 308) par bouclage, soudage, à l'aide de moyens de guidage et/ou à l'aide de moyens de serrage.

5. Procédé selon l'une des revendications 1 à 4, **caractérisé en ce que** les premières parties de bord de filet (106, 206, 306) du premier élément de filet (101, 201, 301) et/ou les deuxièmes parties de bord de filet (106', 206', 306') du deuxième élément de filet (102, 202, 302) sont mobiles par rapport au câble de liaison (108, 208, 308) de l'élément de filet de liaison (103, 203, 303).

6. Procédé selon l'une des revendications 1 à 5, **caractérisé en ce que** les extrémités des câbles (104, 204, 304) du premier élément de filet (101, 201, 301) et/ou les extrémités des câbles (104', 204', 304') du deuxième élément de filet (102, 202, 302) et/ou les extrémités du câble de liaison (108, 208, 308) de l'élément de filet de liaison (103, 203, 303) sont orientées respectivement en sens contraire et sont fermées sur elles-mêmes au moyen d'une liaison non séparable (112, 212), de préférence au moyen de pinces.

7. Procédé selon l'une des revendications 1 à 6, **caractérisé en ce que** des parties de câble qui se croisent (104a, 104a', 204a, 204a', 304a, 304a' et 104b, 104b', 204b, 204b', 304b, 304b') des câbles (104, 104', 204, 204', 304, 304') sont reliées à au moins une partie des points de croisement de câbles (105, 105', 205, 205', 305, 305') et/ou des parties de câbles qui se croisent (108a, 108b, 208a, 208b, 308a, 308b) des câbles de liaison (108, 208, 308) sont reliées à au moins une partie des points de croisement de câble de liaison (109, 209, 309) par soudage et/ou par culottage et/ou au moyen de manchons de sertissage et/ou au moyen de pinces, en particulier au moyen d'étriers de serrage et/ou de serre-fils en croix (113, 114, 213, 214, 313, 314).

8. Procédé selon l'une des revendications 1 à 7, **caractérisé en ce que** l'on utilise pour la fabrication des éléments de filet (101, 201, 301, 102, 202, 302) et/ou de l'élément de filet de liaison (103, 203, 303) des câbles en acier, de préférence en acier galvanisé.

9. Procédé selon l'une des revendications 1 à 8, **caractérisé en ce que** l'on fabrique le premier élément de filet (101, 201, 301) et le deuxième élément de filet (102, 202, 302) avec une grandeur et une forme identiques.

10. Procédé selon la revendication 9, **caractérisé en ce que** l'on fabrique le premier élément de filet (101, 201, 301), le deuxième élément de filet (102, 202, 302) et l'élément de filet de liaison (103, 203, 303) avec une grandeur et une forme identiques.

11. Procédé selon l'une des revendications 1 à 9, **caractérisé en ce que** l'on conduit les câbles (104, 104') du premier élément de filet (101) et du deuxième élément de filet (102) de telle manière que chacun des éléments de filet ainsi fabriqués présente dans la direction longitudinale (L) du filet de protection (100) plusieurs rangées (R) de points de croisement de câbles (105, 105') et dans une direction transversale (Q) s'étendant perpendiculairement à la direction longitudinale (L) du filet de protection (100) plusieurs colonnes (S) de points de croisement de câbles (105, 105'), et
on conduit ledit au moins un câble de liaison (108) entre le premier élément de filet (101) et le deuxième élément de filet (102) de telle manière que l'on obtienne un élément de filet de liaison fermé sur lui-même (103) avec seulement une seule colonne (S) de points de croisement de câble de liaison (109) disposée dans la direction transversale (Q) du filet de protection (100).

12. Procédé selon l'une des revendications 1 à 10, **caractérisé en ce que** l'on conduit les câbles (204, 204') du premier élément de filet (201) et du deuxième élément de filet (202) de telle manière que chacun des éléments de filet ainsi fabriqués présente uniquement une seule colonne (S) de points de croisement de câbles (205, 205') disposée dans une direction transversale (Q) disposée perpendiculairement à la direction longitudinale (L) du filet de protection (200), et
on conduit ledit au moins un câble de liaison (208) entre le premier élément de filet (201) et le deuxième élément de filet (202) de telle manière que l'on obtienne un élément de filet de liaison (203) fermé sur lui-même avec uniquement une seule colonne (S) de points de croisement de câble de liaison (209) disposée en direction transversale (Q) du filet de protection (200).

13. Procédé selon l'une des revendications 1 à 10, **caractérisé en ce que** l'on conduit les câbles (304, 304') du premier élément de filet (301) et du deuxième élément de filet (302) de telle manière que chacun des éléments de filet ainsi fabriqués présente dans la direction longitudinale (L) du filet de protection (300) plusieurs rangées (R) de points de croisement de câbles (305, 305') et dans une direction transversale (Q) disposée perpendiculairement à la direction longitudinale (L) du filet de protection (300) plusieurs colonnes (S) de points de croisement de câbles (305, 305'), et
on conduit ledit au moins un câble de liaison (308) entre le premier élément de filet (301) et le deuxième élément de filet (302) de telle manière que l'on obtienne un élément de filet de liaison fermé sur lui-même (303) avec plusieurs rangées (R) disposées dans la direction longitudinale (L) du filet de protection (300) et plusieurs colonnes (S) disposées dans la direction transversale (Q) du filet de protection de points de croisement de câble de liaison (309).

14. Filet de protection (100, 200, 300), en particulier pour la protection contre les avalanches, les chutes de pierres ou de bois, les laves torrentielles, les coulées de boue ou pour la sécurisation de talus, se composant de
a) au moins un premier élément de filet (101, 201, 301), qui est fabriqué individuellement de façon fermée sur lui-même à partir d'au moins un câble (104, 204, 304) et qui présente plusieurs points de croisement de câbles (105, 205, 305), où chaque fois au moins deux parties de câble (104a, 204a, 304a et 104b, 204b et 304b) se croisent, et
b) au moins un deuxième élément de filet (102, 202, 302), qui est fabriqué individuellement de façon fermée sur lui-même à partir d'au moins un câble (104', 204', 304') et qui présente plusieurs points de croisement de câbles (105', 205', 305'), où chaque fois au moins deux parties de câble (104a', 204a', 304a' et 104b', 204b', 304b') se croisent, et qui est disposé parallèlement par rapport au premier élément de filet (101, 201, 301) et à distance dans une direction longitudinale (L) du filet de protection (100, 200, 300), de telle manière qu'une première partie de bord de filet (106, 206, 306) du premier élément de filet (101, 201, 301) soit tournée vers une deuxième partie de bord de filet (106', 206', 306') du deuxième élément de filet (102, 202, 302),
dans lequel le premier élément de filet (101, 201, 301) présente plusieurs premières parties de bord de câbles (107, 207, 307) disposées dans la première partie de bord de filet (106, 206, 306), qui s'étendent entre chaque fois deux points de croisement de câbles (105, 205, 305) et sont tournées vers la deuxième partie de bord de filet (106', 206', 306'), et
dans lequel le deuxième élément de filet (102, 202, 302) présente plusieurs deuxièmes parties de bord de câbles (107', 207', 307') disposées dans la deuxième partie de bord de filet (106', 206', 306'), qui s'étendent entre chaque fois deux points de croisement de câbles (105', 205', 305') et qui sont tournées vers la première partie de bord de filet (106, 206, 306),
ainsi que
c) au moins un élément de filet de liaison (103, 203, 303), qui est fabriqué de façon fermée sur lui-même à partir d'un câble de liaison (108, 208, 308) et qui présente plusieurs points de croisement de câble de liaison (109, 209, 309), où chaque fois au moins deux parties de câble de liaison (108a, 208a, 308a et 108b, 208b, 308b) se croisent,
dans lequel, à l'aide dudit au moins un câble de liaison (108, 208, 308), au moins une partie des premières parties de bord de câbles (107, 207, 307) du premier élément de filet (101, 201, 301) est reliée à au moins une partie des deuxièmes parties de bord de câbles (107', 207', 307') du deuxième élément de filet (102, 202, 302) tournées vers les premières parties de bord de câble (107, 207, 307) du premier élément de filet (101, 201, 301).

15. Utilisation d'un filet de protection (100, 200, 300) selon la revendication 14, pour la protection contre les avalanches, les chutes de pierres ou de bois, les laves torrentielles, les coulées de boue ou pour la sécurisation de talus.
